# FASCICULE DE BREVET EUROPEEN

(11) **EP 3 162 025 B1**
(45) Date de publication et mention de la délivrance du brevet: **07.04.2021**
(21) Numéro de dépôt: 15756950.0
(22) Date de dépôt: 24.06.2015
(51) Int. Cl.: H04L 29/06, H04L 29/08, G08C 13/00, H04W 4/00, H04W 84/20

(54) **SYSTÈME DE TRAITEMENT DISTRIBUE D'INFORMATIONS EN TEMPS RÉEL**
SYSTEM ZUR ECHTZEITVERARBEITUNG VON VERTEILTEN INFORMATIONEN
REAL-TIME DISTRIBUTED INFORMATION PROCESSING SYSTEM

(30) Priorité: 26.06.2014 FR 1456013
(43) Date de publication de la demande: 03.05.2017
(73) Titulaire: ORANGE, 75015 Paris (FR)
(72) Inventeur: LEMOINE, Benoît, F-22300 Ploubezre (FR)
(86) Numéro de dépôt international: PCT/FR2015/051695
(87) Numéro de publication internationale: WO 2015/197977

(56) Documents cités:
- EP-A2- 2 487 863
- US-A1- 2008 215 609
- BOURGAULT F ET AL: "Decentralized Bayesian negotiation for cooperative search", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, vol. 3, 28 septembre 2004 (2004-09-28), pages 2681-2686, XP010766874, DOI: 10.1109/IROS.2004.1389813 ISBN: 978-0-7803-8463-7
- MAX VAN KLEEK ET AL: "OPF: A Distributed Context-Sensing Framework for Ubiquitous Computing Environments", 1 janvier 2006 (2006-01-01), UBIQUITOUS COMPUTING SYSTEMS LECTURE NOTES IN COMPUTER SCIENCE;;LNCS, SPRINGER, BERLIN, DE, PAGE(S) 82 - 97, XP019045634, ISBN: 978-3-540-46287-3 Chapitre 3; figure 1

## Description

### 1. Domaine de l'invention

L'invention se situe dans les domaines des télécommunications et plus particulièrement des réseaux de communication par paquets. Dans ce type de réseaux, il est possible d'acheminer des flux de données associées à des services temps réel.

Le protocole Internet, appelé IP pour "Internet Protocol", développé par l'IETF, pour "Internet Engineering Task Force", est mis en œuvre sur les réseaux de communication par paquets aussi bien pour supporter des services non temps réel tels que des services de transfert de données, de consultation de pages web, de messagerie électroniques, que des services temps réels ou conversationnels, tels que la téléphonie sur IP, la vidéo téléphonie sur IP ou encore la diffusion vidéo sur IP.

Une méthode pour transporter des flux de données présentant des contraintes de temps réel est prévue par l'IETF dans la norme RFC 3550. Les flux de données temps réel sont généralement composés de paquets RTP, pour "Real Time Protocol", un paquet RTP comprenant des données numériques, issues d'une conversion d'analogique en numérique de signaux collectés par des capteurs ou du traitement numérique de la résultante de la conversion d'analogique en numérique de signaux provenant de ces capteurs. Ainsi le protocole RTP est communément utilisé pour le service de téléphonie sur IP. Dans ce cas, les capteurs sont des microphones reliés directement à un processeur numérique utilisé pour effectuer localement la réduction de bruit et l'annulation d'écho avant d'envoyer les données vers le réseau. Les données temps réel peuvent également correspondre à des données numériques issues de signaux collectés par un ensemble de capteurs distribués observant le même phénomène comme par exemple dans le cas d'observation de conditions météorologiques ou d'une scène dynamique en trois dimensions.

On notera que les paquets RTP peuvent être encapsulés dans des paquets UDP, pour "User Datagram Protocol" défini par l'IETF dans la norme RFC 768, eux-mêmes encapsulés dans les paquets IP.

On notera également qu'un algorithme de compression est habituellement utilisé pour compresser les données numériques avant de les insérer dans les paquets RTP. On pourra citer les algorithmes de compression vidéo définis dans les standards MPEG2 et MPEG4 définis par le Moving Picture Experts Group.

### 2. Etat de la technique antérieure

La fusion d'information en provenance de capteurs distribués consiste à reconstituer une information composite à partir d'informations fournies par chacun des capteurs. Elle est souvent associée à des méthodes de calibration de capteurs et de poursuite d'éléments singuliers parmi l'information composite.

La fusion distribuée se différencie de la fusion centralisée principalement du fait que l'on place à côté des capteurs distribués des processeurs locaux qui réalisent un calcul sur la base des valeurs mesurées avant d'envoyer des données à un processeur central, qui finalise la fusion. Poussé à l'extrême, le principe de fusion distribué peut se passer complètement de processeur central, chaque processeur local finalisant la fusion.

De nombreux travaux sur des algorithmes de fusion distribuée ont été entrepris, notamment pour calibrer ou sélectionner parmi un groupe de capteurs ceux qui envoient les informations les plus pertinentes pour obtenir la meilleure fusion globale.

On pourra citer l'article "Decentralized Bayesian Negotiation for Cooperative Search" (F. Bourgault, et al. Proceedings of 2004 IEEE/RSJ International Coference on Intelligent Robots and Systems, september 28 - October 2, 2004, Sendai, Japan) dans lequel est décrit un procédé de coordination de capteurs intelligents transportés par des avions sans pilote et qui échangent des informations en mode point à point ou en mode diffusion, pour localiser une cible sans recourir à un organe central.

Généralement, les procédés font appel à une modélisation sous la forme d'un filtre de Kalman, que l'on pourra décrire comme suit. Un vecteur de paramètres intrinsèques x(k), appelé encore vecteur d'état, évolue dans le temps de la façon suivante (k étant l'indice de l'instant d'observation) : x(k) = F(k).x(k-1) + G(k).v(k). La matrice d'état F(k) est supposée connue, tout comme G(k), la matrice de bruit relative au modèle. Le vecteur v(k) de bruit relatif au vecteur de paramètres intrinsèques est supposé avoir une covariance connue E{v(i).v^{T}(j)} = δᵢⱼ.Q(i). Les paramètres intrinsèques du modèle sont mis en relation avec les mesures effectuées par les capteurs en considérant un vecteur d'observation contenant les valeurs mesurées périodiquement z(k) = H(k).x(k) + D(k).w(k). La matrice d'observation H(k) est supposée connue, ainsi que D(k), la matrice de bruit relative à l'observation. Le vecteur w(k) de bruit relatif à l'observation est supposé avoir une covariance connue E{w(i).wT(j)} = δᵢⱼ.R(i).

Les solutions existantes ne font pas d'efforts d'économie relativement à la quantité et à la fréquence des échanges de messages nécessaires que ce soit à l'intérieur d'une pluralité de capteurs locaux pour les solutions entièrement distribuées, ou que ce soit entre les capteurs locaux et un processeur central, pour les solutions impliquant un processeur central. Ceci pause des problèmes lorsque les échanges reposent sur des communications radio-électriques, par exemple lorsque les communications sont portées par des réseaux Wi-Fi.

Le document US 2008/215609 A1 décrit une technique d'agrégation de données dans un réseau de capteurs, où un nœud central diffuse à un ensemble de capteurs (sensor nodes) des informations de configuration (configuration information) dans des messages de contrôle (control messages). Ces informations de configuration comprennent un profil de capteur (sensor profile), qui comprend des critères de filtrage (filtering criteria), tels que le type de capteur (sensor type), ou des valeurs minimum et maximum de mesures à retenir. C'est en fonction de ces critères que chacun des capteurs sélectionne les données qu'il doit traiter et décide s'il les traite.

Un des buts de l'invention est de remédier à ces inconvénients de l'état de la technique.

### 3. Exposé de l'invention

L'invention vient améliorer la situation à l'aide d'un procédé de traitement local d'informations (revendication indépendante 1) obtenues par un premier processeur local connecté à un processeur central, le premier processeur local étant identifié par un premier identifiant et étant apte à recevoir des messages en provenance du processeur central, le procédé comprenant les étapes suivantes, mises en œuvre par le premier processeur local :
- obtention de mesures locales pour former un vecteur de contribution locale,
- calcul d'une première matrice d'information relative au vecteur de contribution locale,
- réception d'un message en provenance du processeur central, comprenant une liste d'identifiants de processeurs locaux sélectionnés par le processeur central en fonction de leur pertinence pour le calcul d'une matrice de prédiction globale, dite liste de pertinence la matrice de prédiction globale étant le produit d'une fusion de mesures locales obtenues par des processeurs locaux de la pluralité,
- en fonction au moins de la présence du premier identifiant dans la liste de pertinence, une étape de détermination d'une autorisation de contribution,
- en fonction de l'autorisation de contribution déterminée, une étape d'émission d'un message comprenant le premier identifiant du premier processeur local, la première matrice d'information et le vecteur de contribution locale, au moins à destination du processeur central.

Grâce au procédé de traitement local d'informations selon l'invention, un processeur local ne se donne l'autorisation d'émettre un message que si sa contribution est pertinence, c'est-à-dire que si son identifiant figure dans une liste de pertinence qui est établie par un processeur central. De cette façon, les canaux de communication entre le processeur central et les processeurs locaux ne sont pas encombrés de messages non pertinents.

Selon un aspect de l'invention, le message reçu en provenance du processeur central comprend en outre la matrice de prédiction globale, et le procédé comprend en outre les étapes suivantes :
- calcul d'une valeur relative à la pertinence de l'apport de la première matrice d'information à la matrice de prédiction globale,
- comparaison de la valeur calculée à un seuil ;
et l'autorisation de contribution est en outre déterminée en fonction du résultat de la comparaison.

La contribution d'un processeur local peut devenir pertinente, même si à un instant donné il ne figurait pas dans la liste de pertinence. Avantageusement, si le processeur local ne figure pas dans la liste de pertinence, il calcule la pertinence de son apport et émet un message seulement si cet apport est suffisant. Sa contribution peut donc quand même être prise en compte par le processeur central, si elle est estimée pertinente par le processeur local.

Selon un aspect de l'invention, le premier processeur local est également apte à recevoir des messages en provenance d'au moins un deuxième processeur local, et le procédé comprend en outre la réception d'un message en provenance du deuxième processeur local, le message comprenant une deuxième matrice d'information relative au deuxième processeur local, le calcul d'une valeur relative à la pertinence de l'apport de la première matrice d'information tenant en outre compte de l'apport de la deuxième matrice d'information à la matrice de prédiction globale.

Il est possible que d'autres processeurs locaux contribuent. Dans ce cas leur apport peut influer sur la pertinence de l'apport du premier processeur local. Avantageusement, si le premier processeur local n'est pas dans la liste de pertinence, sa contribution peut quand même être prise en compte par le processeur central, mais seulement si elle reste pertinente lorsqu'elle est prise en compte en combinaison avec les contributions d'autres processeurs locaux.

Selon un aspect de l'invention, le message en provenance du deuxième processeur local comprend en outre un deuxième identifiant, le procédé comprenant en outre le désabonnement d'un flux de messages en provenance du deuxième processeur local si le deuxième identifiant n'est pas compris dans la liste de pertinence.

Si un autre processeur local ne figure pas dans la liste de pertinence, il peut être inutile que le premier processeur prenne en compte sa contribution lorsqu'il détermine la pertinence de sa propre contribution en combinaison avec celle d'autres processeurs locaux. Avantageusement, il a la possibilité de cesser de recevoir les messages en provenance d'un autre processeur local, tant que cet autre processeur local ne réapparait pas dans la liste de pertinence, ce qui limite l'encombrement des canaux de communication.

Selon un aspect de l'invention, le procédé de traitement local d'informations comprend en outre l'abonnement à un flux de messages en provenance d'au moins un deuxième processeur local dont un identifiant est compris dans la liste de pertinence.

Afin de limiter l'encombrement des canaux de communication, il n'est pas souhaitable qu'un processeur local reçoive systématiquement les messages de tous les autres processeurs locaux. Mais il n'est pas souhaitable qu'un processeur local ne reçoive aucun message d'un autre processeur local dont la contribution est pertinente. Avantageusement, un processeur local a la possibilité de ne s'abonner qu'aux flux des processeurs locaux présents dans la liste de pertinence, ce qui limite l'encombrement des canaux de transmission. De plus, si la liste de petinence est ordonnée par degré de pertinence, il peut choisir de ne s'abonner qu'au(x) premier(s) mais pas à tous, ce qui limite encore davantage l'encombrement des canaux de communication.

Les différents aspects du procédé de traitement local d'informations qui viennent d'être décrits peuvent être mis en œuvre indépendamment les uns des autres ou en combinaison les un avec les autres.

L'invention concerne aussi un procédé de traitement central d'informations locales (revendication indépendante 6) obtenues par des processeurs locaux d'une pluralité de processeurs locaux connectés à un processeur central, comprenant les étapes suivantes mises en œuvre par le processeur central :
- réception d'un message en provenance d'un premier processeur local, le message comprenant un identifiant, une matrice d'information et un vecteur de contribution, relatifs au premier processeur local,
- réception d'un message en provenance d'un deuxième processeur local, le message comprenant un identifiant, une matrice d'information et un vecteur de contribution, relatifs au deuxième processeur local,
- ajout des identifiants relatifs aux premier et deuxième processeurs locaux dans une liste de processeurs locaux écoutés par le processeur central,
- calcul d'une matrice de prédiction globale à partir des matrices d'information reçues la matrice de prédiction globale étant le produit d'une fusion de mesures locales obtenues par les processeurs locaux,
- sélection d'au moins un processeur local de la liste de processeurs locaux écoutés par le processeur central, en fonction d'un critère de pertinence de la matrice d'information associée à l'au moins un processeur local,
- émission vers la pluralité de processeurs locaux d'un message comprenant la matrice de prédiction globale et une liste des identifiants des processeurs locaux sélectionnés, dite liste de pertinence.

Grâce au procédé de traitement central d'informations locales selon l'invention, tous les processeurs locaux obtiennent, de la part du processeur central, un retour représentatif de celles des contributions émises par des processeurs locaux qui sont prises en compte par le processeur central.

La liste des processeurs locaux sélectionnés et la matrice de prédiction globale, générées par le processeur central et émises vers touts les processeurs locaux, permettent à chacun de ceux-ci de déterminer avec exactitude la pertinence de l'apport de leur propre contribution avant d'émettre un message, et donc d'autoriser ou d'inhiber efficacement l'émission de messages. Ceci contribue à limiter aux messages pertinents l'encombrement des canaux de communication.

Selon un aspect de l'invention, l'étape de sélection comprend les étapes suivantes :
- calcul d'une valeur relative à la pertinence de l'apport de la matrice d'information du processeur local à la matrice de prédiction globale,
- comparaison de la valeur calculée à un seuil, la sélection étant effectuée si le seuil est atteint.

Grâce à cet aspect le processeur central peut ignorer, et donc faire ignorer par les autres processeurs locaux, ceux des processeurs locaux dont l'apport est le moins pertinent.

Selon un aspect de l'invention, lorsque plusieurs processeurs locaux sont sélectionnés, le procédé comprend, avant l'étape d'émission, le tri par ordre de pertinence décroissante des identifiants de processeurs locaux sélectionnés dans la liste de pertinence.

Grâce à cet aspect, un processeur local recevant la liste de pertinence peut déterminer sans calcul lequel des processeurs sélectionnés dans la liste est le plus pertinent. Il peut ainsi décider, sans calcul, de ne prendre en compte que le plus pertinent, ou les "n" plus pertinents.

Les différents aspects du procédé de traitement central d'informations locales qui viennent d'être décrits peuvent être mis en œuvre indépendamment les uns des autres ou en combinaison les un avec les autres

Selon un aspect du procédé de traitement local d'informations et du procédé de traitement central d'informations locales, les messages sont des paquets de type RTP, et la liste de pertinence est comprise dans l'entête d'un paquet de type RTP.

Les vecteurs et les matrices calculés par les processeurs doivent être échangées à des fréquences élevées pour que le processeur central puisse assurer une fusion des informations des informations locales qui reflète la réalité au plus près. Les paquets RTP ont l'avantage d'être prévus pour transporter des données numériques en temps réel, et peuvent aussi transporter dans leur entête des informations de signalisation telles que la liste de pertinence.

L'invention concerne encore un dispositif de traitement local d'informations (revendication indépendante 10) obtenues par un premier processeur local connecté à un processeur central, le premier processeur local étant identifié par un premier identifiant et étant apte à recevoir des messages en provenance du processeur central, le dispositif comprenant :
- un module d'obtention de mesures locales pour former un vecteur de contribution locale,
- un module de calcul d'une première matrice d'information relative au vecteur de contribution locale,
- un module de réception d'un message en provenance du processeur central, comprenant une liste d'identifiants de processeurs locaux sélectionnés par le processeur central en fonction de leur pertinence pour le calcul d'une matrice de prédiction globale, dite liste de pertinence la matrice de prédiction globale étant le produit d'une fusion de mesures locales obtenues par des processeurs locaux de la pluralité,
- un module de détermination d'une présence du premier identifiant dans la liste de pertinence,
- un module de détermination d'une autorisation de contribution, en fonction au moins de la présence du premier identifiant dans la liste de pertinence,
- un module d'émission d'un message comprenant le premier identifiant du premier processeur local, la première matrice d'information et le vecteur de contribution locale, au moins à destination du processeur central, en fonction de l'autorisation de contribution déterminée.

Ce dispositif, apte à mettre en oeuvre dans tous ses modes de réalisation le procédé de traitement local d'informations qui vient d'être décrit, est destiné à être compris dans un processeur local.

L'invention concerne aussi un dispositif de traitement central (revendication indépendante 11) d'informations locales obtenues par des processeurs locaux d'une pluralité de processeurs locaux connectés à un processeur central, comprenant :
- un module de réception d'un message en provenance d'un processeur local, le message comprenant un identifiant, une matrice d'information et un vecteur de contribution, relatifs au processeur local,
- un module d'ajout de l'identifiant relatif au processeur local dans une liste de processeurs locaux écoutés par le processeur central,
- un module de calcul d'une matrice de prédiction globale à partir de la matrice d'information reçue la matrice de prédiction globale étant le produit d'une fusion de mesures locales obtenues par des processeurs locaux de la pluralité,
- un module de sélection d'au moins un processeur local de la liste de processeurs locaux écoutés par le processeur central, en fonction d'un critère de pertinence de la matrice d'information associée à l'au moins un processeur local,
- un module d'émission vers la pluralité de processeurs locaux d'un message comprenant la matrice de prédiction globale et une liste des identifiants des processeurs locaux sélectionnés, dite liste de pertinence.

Ce dispositif, apte à mettre en oeuvre dans tous ses modes de réalisation le procédé de traitement central d'informations locales qui vient d'être décrit, est destiné à être compris dans un processeur central.

L'invention concerne aussi un système (revendication indépendante 12) de traitement d'informations locales comprenant un dispositif de traitement central d'informations locales tel qui vient d'être décrit et au moins un dispositif de traitement local d'informations tel qui vient d'être décrit.

Un tel système, en distribuant vers les processeurs locaux une partie des calculs liés à la pertinence de leur contribution individuelle, permet à un processeur central d'obtenir toutes les informations dont il a besoin pour en effectuer une fusion en temps réel, tout en réduisant fortement le nombre de messages émis par les processeurs locaux, et donc l'encombrement qu'ils créent dans les canaux de communication.

L'invention concerne aussi un programme d'ordinateur (revendication indépendante 13) comprenant des instructions pour la mise en œuvre des étapes du procédé de traitement local d'informations qui vient d'être décrit, lorsque ce programme est exécuté par un processeur.

Cela peut également être présenté comme un support d'enregistrement lisible par un processeur local sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur (revendication indépendante 14) comprenant des instructions pour la mise en œuvre des étapes du procédé de traitement central d'informations locales qui vient d'être décrit, lorsque ce programme est exécuté par un processeur.

Cela peut également être présenté comme un support d'enregistrement lisible par un processeur central sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un exemple de réseau mettant en œuvre l'invention, comprenant un processeur central et une pluralité de processeurs locaux,
- la figure 2 présente un exemple de mise en œuvre d'un premier aspect du procédé de traitement local d'informations, selon un mode particulier de réalisation de l'invention,
- la figure 3 présente un exemple de mise en œuvre d'un deuxième aspect du procédé de traitement local d'informations, selon un mode particulier de réalisation de l'invention,
- la figure 4 présente un exemple de mise en œuvre d'un troisième aspect du procédé de traitement local d'informations, selon un mode particulier de réalisation de l'invention,
- la figure 5 présente un exemple de mise en œuvre d'un premier aspect du procédé de traitement central d'informations locales, selon un mode particulier de réalisation de l'invention,
- la figure 6 présente un exemple de mise en œuvre d'un deuxième aspect du procédé de traitement central d'informations locales, selon un mode particulier de réalisation de l'invention,
- la figure 7 présente un exemple de mise en œuvre d'un troisième aspect du procédé de traitement central d'informations locales, selon un mode particulier de réalisation de l'invention,
- la figure 8 présente un exemple de structure d'un dispositif de traitement local d'informations, selon un aspect de l'invention, et
- la figure 9 présente un exemple de structure d'un dispositif de traitement central d'informations locales, selon un aspect de l'invention.

### 5. Description détaillée d'au moins un mode de réalisation de l'invention

Dans la suite de la description, on présente des exemples de plusieurs modes de réalisation de l'invention se basant sur Wi-Fi comme technologie de communication, mais l'invention s'applique également à d'autres technologies de communication, telles que les réseaux cellulaires (définis au 3GPP), les réseaux Ethernet (définis à l'IEEE), etc.

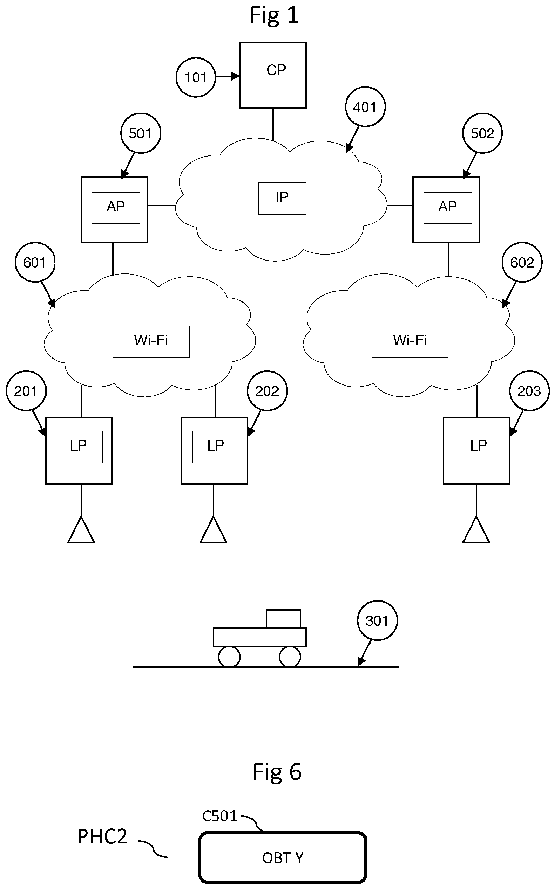

La **figure 1** présente de façon schématique un exemple de réseau mettant en œuvre l'invention, comprenant un processeur central et une pluralité de processeurs locaux.

Dans cet exemple, des processeurs locaux 201, 202 et 203 échangent en temps réel des informations avec un processeur central 101 via un réseau IP 401.

On se place ici dans le cas particulier, illustratif mais non limitatif, où les processeurs locaux appartiennent à des caméras vidéos et où l'échange en temps réel d'informations est fait dans le but de générer une vue en trois dimensions d'une scène commune 301 sur la base d'un modèle 3D maillé ou encore sur la base d'une image intégrale composée de multiple vues déphasées en rotation selon un axe vertical et permettant une restitution auto-stéréoscopique.

La technologie Wi-Fi étant disponible sur de nombreux appareils grands publics, nous la prendrons comme exemple de technologie de communication, mais d'autres technologies pourront être considérées, comme la radio cellulaire (par exemple la 4G définie au 3GPP sous le nom de LTE). Les caméras vidéo pourront ainsi être par exemple des appareils photo numériques disposant d'une interface Wi-Fi, des tablettes Wi-Fi ou des téléphones mobiles intelligents disposant d'une mini caméra intégrée et d'une interface Wi-Fi. Les caméras vidéo disposant également de microphones intégrés ou externes, on pourra facilement étendre le concept décrit ci-dessous à la génération d'un enregistrement sonore spatialisé.

Dans ce genre d'application, le protocole IP peut être utilisé pour transporter les informations entre les processeurs locaux 201, 202, 203 et le processeur central 101.

Le RFC3550 prévoit l'encapsulation des paquets RTP soit dans des paquets IP unicast, définis par exemple pour IPv4 dans le RFC 791 comme ayant une adresse IP destination unicast, soit dans des paquets IP multicast, définis par exemple pour IPv4 dans le RFC 3171 comme ayant une adresse IP destination multicast appartenant à la plage d'adresse 224.0.0.0 à 239.255.255.255. Les paquets RTP peuvent également être encapsulés dans des paquets IPv6 unicast ou multicast, dont la spécification peut être trouvée dans le RFC 2460.

Contrairement à un mode diffusé, le mode multicast permet de limiter la diffusion de l'information envoyée et de faire en sorte que seuls les membres d'un groupe multicast puissent recevoir l'information envoyée à destination de ce groupe multicast.

Ainsi, les paquets IP multicast sont acheminés dans le réseau IP et répliqués au plus près à destination de clients IGMP (en référence à la terminologie anglo-saxonne : "Internet Group Management Protocol") défini par exemple en version 2 dans le RFC 2236, ayant demandé au réseau IP à recevoir les paquets IPv4 émis à destination d'une adresse IPv4 multicast donnée, ou bien de clients MLD (en référence à la terminologie anglo-saxonne : "Multicast Listener Discovery") défini par exemple dans le RFC 2710, ayant demandé au réseau IP à recevoir les paquets IPv6 émis à destination d'une adresse IPv6 multicast donnée.

Le mode multicast présente donc l'avantage par rapport au mode diffusé de permettre le transport de l'information et du retour d'information entre capteurs et processeur central sur un réseau IP déjà utilisé pour d'autres services et qui transporte des paquets IP entre d'autres équipements terminaux.

Cet avantage permet notamment de positionner le processeur central CP loin des réseaux d'accès sur lequel sont connectés les processeurs locaux LP et ainsi de mettre en œuvre un nombre réduit de processeurs centraux pour offrir un service de fusion d'information au grand public à moindre frais, voire d'en limiter le nombre à un, comme dans notre exemple.

Les processeurs locaux peuvent ainsi envoyer en unicast ou en multicast de l'information vers le processeur central, en utilisant des paquets RTP dans lesquels ils renseigneront leur identifiant SSRC (en référence à la terminologie anglo-saxonne : "Synchronisation SouRCe"), et le processeur central peut envoyer en unicast ou en multicast de l'information vers les processeurs locaux, en utilisant des paquets RTP dans lesquels il renseignera son identifiant SSRC.

Afin de limiter le nombre de flux multicast reçus par un client multicast, ce dernier peut demander au réseau à recevoir des flux multicast en spécifiant en plus de l'adresse IP du groupe multicast la ou les adresses IP sources à autoriser ou à exclure par exemple à l'aide du protocole IGMPv3 (Internet Group Management Protocol, ou protocole de gestion de groupe Internet) défini dans le standard IETF RFC 3376 ou du protocole MLDv2 (Multicast Listener Discovery, ou découverte d'auditeur en multidiffusion) défini dans le standard IETF RFC 3810.

Lorsqu'un client multicast s'abonne à un flux multicast émis par un autre client ou par un serveur, cela signifie que l'adresse IP de cet autre client ou du serveur est spécifiée dans une demande de réception de flux multicast. Lorsqu'un client multicast se désabonne à un flux multicast émis par un autre client ou par un serveur, cela signifie que l'adresse IP de cet autre client ou du serveur n'est plus spécifiée dans une demande de réception de flux multicast, ou bien qu'elle est spécifiée dans une résiliation de réception de flux multicast.

Nous supposerons par la suite que le processeur central et les processeurs locaux envoient leurs paquets RTP en multicast. Afin de recevoir les paquets RTP émis par les processeurs locaux, le processeur central s'abonne à l'ensemble du groupe multicast sans préciser les adresses IP des sources de flux multicast. Afin de ne recevoir par défaut que les paquets RTP en provenance du processeur central, les processeurs locaux s'abonnent au groupe multicast en spécifiant l'adresse IP du processeur central. Enfin nous supposerons que les processeurs locaux ont également connaissance des adresses IP des autres processeurs locaux de façon à pouvoir préciser dans une mise à jour de son abonnement l'adresse IP d'un autre processeur local duquel il souhaite recevoir ou ne plus recevoir de trafic RTP.

Les réseaux Wi-Fi 601 et 602, supportés par respectivement les points d'accès AP 501 et 502, présentent l'avantage de supporter également le mode multicast, de sorte que lorsqu'un terminal Wi-Fi envoie une trame Wi-Fi en multicast, n'importe quel autre terminal Wi-Fi à sa portée peut recevoir la trame Wi-Fi et la prendre en compte. L'accès au médium Wi-Fi peut être géré par des mécanismes utilisant un canal à accès contrôlé HCCA (HCF Controlled Channel Access) défini dans le standard 802.11e et qui est géré par un HCF (Hybrid Coordination Function). Dans le cas de trafic multicast, il est possible d'utiliser un proxy IGMP ou MLD pour assurer un contrôle d'abonnement aux flux multicast en fonction de la charge observée par le point d'accès Wi-Fi, ce qui permet de n'utiliser que le canal à accès multiple par évitement de collision selon la méthode CSMA/CA (Carrier Sense Multiple Access with Collision Avoidance) défini dans le cadre du DCF (Distributed Coordination Function), seule fonction obligatoire du standard IEEE 802.11 et donc compatible avec une majorité de terminaux Wi-Fi.

Le procédé de contribution d'informations selon l'invention, mis en œuvre par un processeur local, peut se découper en trois phases:
- une phase PHL1 d'obtention d'informations mesurées localement,
- une phase PHL2 d'écoute des autres processeurs locaux,
- une phase PHL3 d'écoute du processeur central.

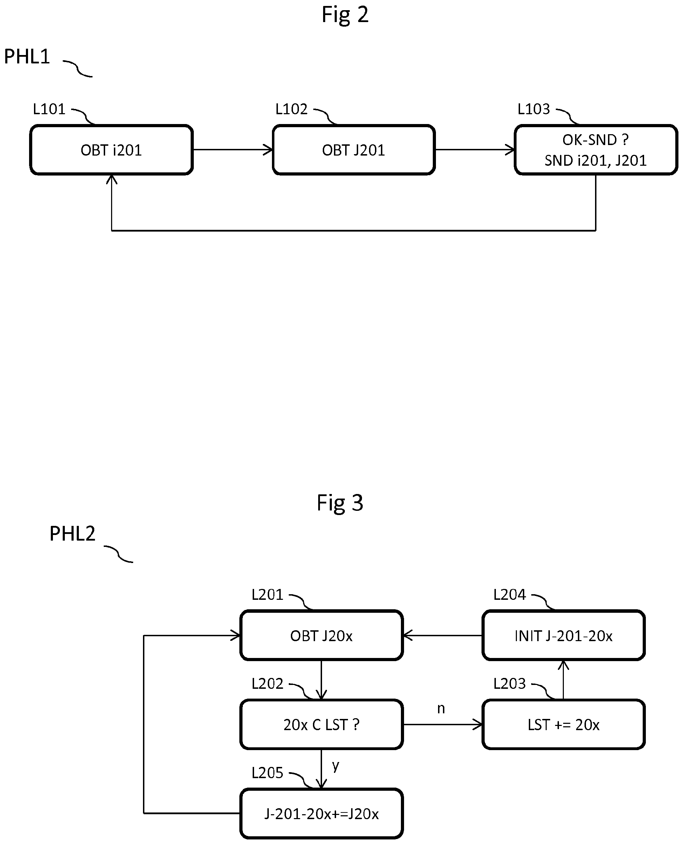

La **figure 2** présente un exemple de mise en œuvre d'un premier aspect du procédé de contribution d'informations, selon un mode particulier de réalisation de l'invention. Ce premier aspect du procédé de contribution concerne la phase PHL1 qui comprend les étapes L101 à L103.

Lors d'une étape **L101,** le processeur local 201 obtient, par exemple d'un capteur auquel il est connecté, une ou plusieurs mesures locales z(k) et forme un vecteur i201 de contribution locale égal à H^{T}(k).R⁻¹(k).z(k) avec les matrices H et R du filtre de Kalman. Ce vecteur i201 est d'une taille correspondant au nombre total de paramètres intrinsèques que le système est en mesure de traiter pour la fusion, mais les mesures locales obtenues par le processeur local 201 peuvent ne concerner qu'un sous-ensemble de ces paramètres intrinsèques.

Lors d'une étape **L102,** le processeur local 201 calcule une matrice J201 d'information relative au vecteur i201 et égale à H^{T}(k).R⁻¹(k).H(k) avec les matrices H et R du filtre de Kalman.

Lors d'une étape **L103** exécutée si le processeur local 201 possède une autorisation de contribuer, dont la détermination est décrite par la suite, il émet un message comprenant son identifiant SSRC1, la matrice J201 calculée ainsi que le vecteur i201 obtenu. Ce message est émis en mode multicast vers le processeur central 101, ainsi que vers les autres processeurs locaux qui se sont abonnés aux flux du processeur local 201.

Les étapes L101 à L103 formant la phase PHL1 sont répétées selon une fréquence adaptée à la dynamicité des mesures locales obtenues par le processeur local.

Si le processeur local 201 ne possède pas ladite autorisation d'émettre, l'étape L103 n'est pas exécutée, ce qui limite le nombre de messages émis par le processeur local.

La **figure 3** présente un exemple de mise en œuvre d'un deuxième aspect du procédé de contribution d'informations, selon un mode particulier de réalisation de l'invention. Ce deuxième aspect du procédé de contribution concerne la phase PHL2 qui comprend les étapes L201 à L205.

Lors d'une étape **L201,** le processeur local 201 reçoit un message en provenance d'un autre processeur local, le processeur local 202 par exemple. Le message comprend un identifiant SSRC2 du processeur local 202, ainsi qu'une matrice d'information J202 calculée par le processeur local 202.

Lors d'une étape **L202,** le processeur local 201 vérifie si l'identifiant SSRC2 est dans une liste SSRC-201 de processeurs locaux écoutés par le processeur local 201.

Si la liste SSRC-201 n'inclut pas l'identifiant SSRC2, le processeur local 201 l'y ajoute lors d'une étape **L203,** et, lors d'une étape **L204,** initialise une matrice J-201-202, dite matrice d'information incrémentée, avec les valeurs de la matrice d'information J202 reçue.

Si la liste SSRC-201 inclut déjà l'identifiant SSRC2, le processeur local 201 additionne les valeurs de la matrice d'information J202 reçue à la matrice J-201-202 d'information incrémentée, lors d'une étape **L205.**

A l'intérieur d'une période donnée correspondant à la durée d'une phase PHL3 décrite plus bas, les étapes L201 à L205 formant la phase PHL2 sont répétées autant de fois que le processeur local 201 reçoit un message d'un autre processeur local. On comprend donc que le processeur local 201 construit localement un ensemble de matrices J-201-20x d'information incrémentée, à partir des messages reçus d'autres processeurs locaux 20x, et que le processeur local peut recevoir d'un même autre processeur local soit zéro, soit un, soit plusieurs messages durant cette période.

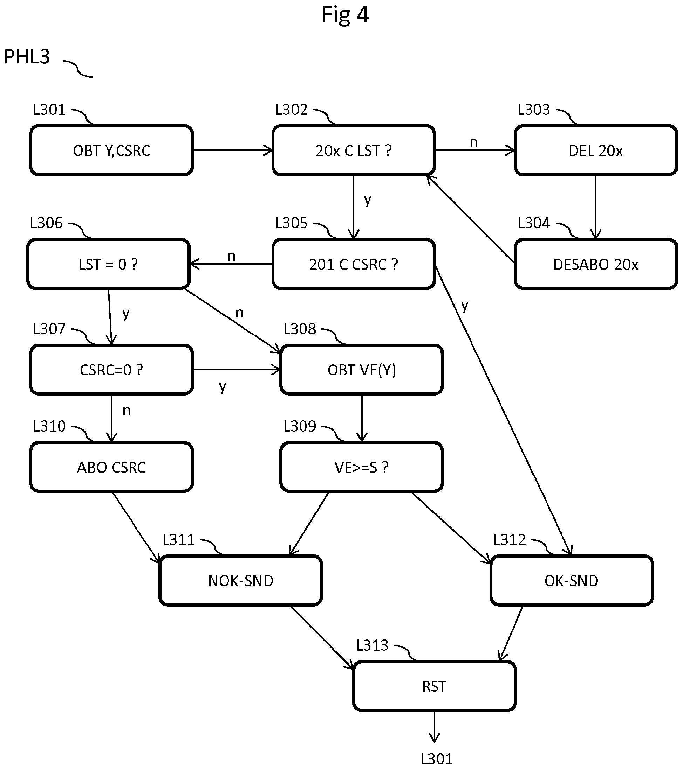

La **figure 4** présente un exemple de mise en œuvre d'un troisième aspect du procédé de contribution d'informations, selon un mode particulier de réalisation de l'invention. Ce troisième aspect du procédé de contribution concerne la phase PHL3, qui comprend les étapes L301 à L313.

Lors d'une étape **L301,** le processeur local 201 reçoit un message en provenance du processeur central 101, comprenant une matrice Y de prédiction globale, et une liste CSRC d'identifiants de processeurs locaux sélectionnés par le processeur central 101.

Lors d'une étape **L302,** le processeur local 201 vérifie que sa liste SSRC-201 est strictement incluse dans la liste CSRC.

Si la liste SSRC-201 contient des identifiants de processeurs locaux qui ne sont pas présents dans la liste CSRC, le processeur local 201 retire ces identifiants de sa liste SSRC-201 lors d'une étape **L303,** et se désabonne de ces processeurs locaux, lors d'une étape **L304.** Ainsi, lors de la phase PHL2 suivante, le processeur local 201 ne recevra plus de messages de ces processeurs locaux qui n'ont pas été sélectionnés par le processeur central 101, et l'encombrement du réseau s'en verra diminué.

Lors d'une étape **L305,** le processeur local 201 vérifie que son propre identifiant SSRC1 est compris dans la liste CSRC.

Si l'identifiant SSRC1 est compris dans la liste CSRC, l'autorisation de contribuer est donnée ou maintenue, lors d'une étape **L312.** Cette autorisation est utilisée à l'étape L103 précédemment décrite.

Si l'identifiant SSRC1 n'est pas compris dans la liste CSRC, alors le processeur local 201 détermine si sa contribution est pertinente, lors des étapes L306 à L309.

Lors d'une étape **L306,** le processeur local 201 vérifie si sa liste SSRC-201 de processeurs locaux écoutés est vide.

Lors d'une étape **L307,** le processeur local 201 vérifie alors si la liste CSRC de processeurs locaux sélectionnés par le processeur central 101 est vide.

Si la liste SSRC-201 est vide, et si la liste CSRC est non-vide, alors le processeur local 201 s'abonne à au moins un processeur local de la liste CSRC, lors d'une étape **L310.** Avantageusement, le processeur local s'abonne au premier, ou au n premiers processeurs locaux de la liste dans un ordre de pertinence décroissante. Dans ce cas, la contribution du processeur local 201 n'est pas jugée pertinente, et l'autorisation de contribuer est inhibée ou retirée, lors d'une étape **L311.**

Si la liste SSRC-201 est non-vide, ou si la liste CSRC est vide, alors le processeur local calcule, lors d'une étape **L308,** une valeur VE relative à la pertinence pour la matrice Y de prédiction globale de l'apport de sa matrice J201 d'information et des matrices J-201-20x d'information incrémentée correspondant à des processeurs locaux 20x dont les identifiants n'ont pas été retirés de la liste SSRC-201 lors de l'étape L303.

Si on note |M| le déterminant de la matrice M, alors la valeur VE est calculée comme étant le ratio entre le déterminant de la matrice Y augmentée de la matrice J201 et des matrices J-201-20x, et le déterminant de la matrice augmentée uniquement des matrices J-201-20x : VE = |Y+J201+∑J-201-20x|/|Y+∑J-201-20x|.

Lors d'une étape **L309** consécutive à l'étape L308, le processeur local compare la valeur VE à un seuil S. Si la valeur VE atteint ou dépasse S, l'étape L312 est effectuée, où l'autorisation de contribuer est donnée ou maintenue. Sinon, l'étape L311 est effectuée, où l'autorisation de contribuer est inhibée ou retirée.

Lors d'une étape **L313** à la fin de la phase PHL3, et avant le début d'un nouveau cycle de phases PHL2, le processeur local 201 initialise à zéro toutes ses matrices J-201-20x d'information incrémentée.

Le procédé de traitement central d'informations locales selon l'invention, mis en oeuvre par le processeur central, se découpe en trois phases:
- une phase PHC1 d'écoute des processeurs locaux,
- une phase PHC2 de fusion d'informations mesurées par les processeurs locaux,
- une phase PHC3 d'émission d'une matrice de prédiction globale et d'une liste de processeurs locaux sélectionnés.

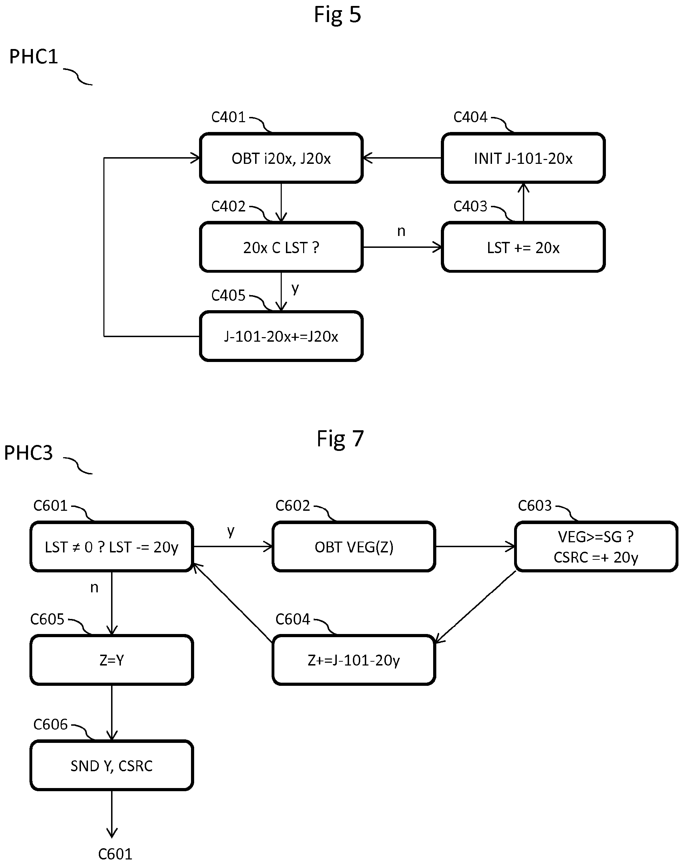

La **figure 5** présente un exemple de mise en œuvre d'un premier aspect du procédé de traitement central d'informations locales, selon un mode particulier de réalisation de l'invention. Ce premier aspect du procédé de traitement central d'informations locales concerne la phase PHC1, qui comprend les étapes C401 à C405.

Lors d'une étape **C401,** le processeur central 101 reçoit un message en provenance d'un processeur local, le processeur local 201 par exemple. Le message comprend l'identifiant SSRC1 du processeur local 201, ainsi que le vecteur i201 de contribution locale formé par le processeur local 201, et la matrice d'information J201 calculée par le processeur local 201.

Lors d'une étape **C402,** le processeur central 101 vérifie si l'identifiant SSRC1 est dans une liste SSRC-101 de processeurs locaux écoutés par le processeur central 101.

Si la liste SSRC-101 n'inclut pas l'identifiant SSRC1, le processeur central 101 l'y ajoute lors d'une étape **C403,** et, lors d'une étape **C404,** initialise une matrice J-101-201 d'information incrémentée, avec les valeurs de la matrice d'information J201 reçue.

Si la liste SSRC-101 inclut déjà l'identifiant SSRC1, le processeur central 101 additionne les valeurs de la matrice d'information J201 reçue à la matrice J-101-201 d'information incrémentée, lors d'une étape **C405.**

A l'intérieur d'une période donnée correspondant à la durée d'une phase PHC3 décrite plus bas, les étapes C401 à C405 formant la phase PHC1 sont répétées autant de fois que le processeur central 101 reçoit un message d'un processeur local. On comprend donc que le processeur central 101 construit centralement un ensemble de matrices J-101-20x d'information incrémentée, à partir des messages reçus de processeurs locaux 20x, et que le processeur central 101 peut recevoir d'un même processeur local soit zéro, soit un, soit plusieurs messages durant cette période.

La **figure 6** présente un exemple de mise en œuvre d'un deuxième aspect du procédé de traitement central d'informations locales, selon un mode particulier de réalisation de l'invention. Ce deuxième aspect du procédé de traitement central d'informations locales concerne la phase PHC2, qui comprend l'étape C501.

Lors d'une étape **C501,** le processeur central 101 calcule une fusion des informations locales telles que mesurées par les processeurs locaux, à partir des vecteur i20x de contribution et des matrices J20x d'information reçues des processeurs locaux 20x.

Cette phase PHC2, dite phase de fusion proprement dite, est répétée selon une périodicité adaptée au type des informations qui sont fusionnées. En reprenant l'exemple de la figure 1, c'est à dire la scène 301 en trois dimensions observée par les caméras vidéo 201, 202 et 203, la périodicité de la phase de fusion doit être d'une fréquence proportionnelle à la vitesse des objets mouvants qui composent la scène 301, afin d'obtenir une résolution de la fusion qui soit satisfaisante.

On note x un vecteur d'information global et X une matrice d'information globale, qui sont remplis de valeurs nulles avant la première occurrence de la phase PHC2.

On note y un vecteur de prédiction global et Y une matrice de prédiction globale, qui sont remplis de valeurs nulles avant la première occurrence de la phase PHC2.

A chaque itération de la phase PHC2, on prend en compte les matrices F, G et Q du filtre de Kalman pour accomplir les actions suivantes :
- Une matrice P est calculée à partir de la dernière matrice d'information globale X (calculée lors de la précédente itération de la phase PHC2) comme étant égale à P = F^{-T}.X.F⁻¹.
- Une matrice E est calculée à partir de la matrice P comme étant égale à E = G^{T}.P.G + Q⁻¹.
- Une matrice O est calculée à partir des matrices P et E comme étant égale à O = P.G.E⁻¹.
- Le vecteur de prédiction global y est calculé à partir du dernier vecteur d'information global x (calculé lors de la précédente itération de la phase PHC2) comme étant égal à y = (1-O.G^{T}).F^{-T}.x.
- La matrice de prédiction globale Y est calculée comme étant égale à Y = P-O.E.O^{T}.
- Le vecteur d'information x est calculé à partir du vecteur de prédiction global y augmenté des vecteurs de contribution i20x reçus des processeurs locaux 20x : x = y + ∑i20x.
- La matrice d'information X est calculée à partir de la matrice de prédiction globale Y augmentée des matrices d'information J20x reçues des processeurs locaux 20x : X = Y + ∑J20x.

On comprend que le calcul de la matrice Y de prédiction globale est un produit de la phase PHC2.

La **figure 7** présente un exemple de mise en œuvre d'un troisième aspect du procédé de traitement central d'informations locales, selon un mode particulier de réalisation de l'invention. Ce troisième aspect du procédé de traitement central d'informations locales concerne la phase PHC3, qui comprend les étapes C601 à C606.

On note Z une matrice d'information incrémentale remplie de valeurs nulles avant la première occurrence de la phase PHC3.

La liste CSRC de processeurs locaux sélectionnés par le processeur central est initialement vide au début de chaque occurrence de la phase PHC3.

Lors d'une étape **C601,** si la liste SSRC-101 est non-vide, le processeur central 101 identifie dans cette liste le processeur local 20y dont le déterminant de la matrice J-101-20y d'information incrémentée est le plus élevé. Le processeur central 101 retire l'identifiant correspondant SSRCy de la liste SSRC-101.

Lors d'une étape **C602,** le processeur central 101 calcule une valeur VEG relative à la pertinence pour la matrice Z d'information incrémentale, de l'apport de la matrice J-101-20y d'information incrémentée.

Si on note |M| le déterminant de la matrice M, alors la valeur VEG est calculée comme étant le ratio entre le déterminant de la matrice Z augmentée de la matrice J-101-20y et le déterminant de la matrice Z : VEG = |Z+J-101-20y|/|Z|.

Si la valeur VEG atteint un seuil prédéterminé SG, l'identifiant SSRCy est ajouté à la liste CSRC de processeurs locaux sélectionnés par le processeur central, lors d'une étape **C603.** Avantageusement, l'ordre d'ajout est respecté, ce qui permet d'obtenir une liste CSRC ordonnée par pertinence décroissante de processeurs locaux.

Lors d'une étape **C604,** le processeur central 101 additionne les valeurs de la matrice J-101-20y d'information incrémentée à la matrice Z d'information incrémentale : Z = Z + J-101-20y.

Les étapes C601 à C604 sont répétées jusqu'à ce que la liste SSRC-101 soit vide.

Une fois la liste SSRC-101 vide, le processeur central 101 remplace, lors d'une étape **C605,** le contenu de la matrice Z d'information incrémentale par le contenu de la matrice Y de prédiction globale calculée lors de la dernière occurrence de la phase PHC2.

Lors d'une étape **C606,** le processeur central 101 émet vers la pluralité de processeurs locaux la matrice Z d'information incrémentale, qui est aussi à ce stade la matrice Y de prédiction globale calculée dans la dernière occurrence de la phase PHC2, ainsi que la liste CSRC de processeurs locaux sélectionnés.

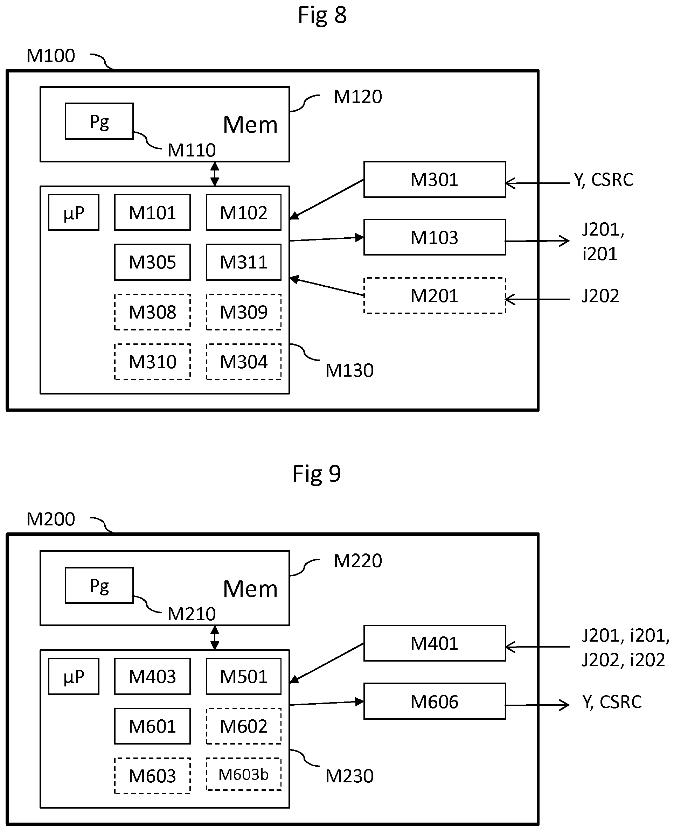

En relation avec la **figure 8****,** on présente maintenant un exemple de structure d'un dispositif de traitement local d'informations, selon un aspect de l'invention.

Le dispositif M100 de transmission d'information de routage met en œuvre le procédé de traitement local d'informations.

Un tel dispositif M100 peut être compris dans un premier processeur local.

Par exemple, le dispositif M100 comprend une unité de traitement M130, équipée par exemple d'un microprocesseur µP, et pilotée par un programme d'ordinateur M110, stocké dans une mémoire M120 et mettant en œuvre le procédé de traitement local d'informations selon l'invention. A l'initialisation, les instructions de code du programme d'ordinateur M110 sont par exemple chargées dans une mémoire RAM, avant d'être exécutées par le processeur de l'unité de traitement M130.

Un tel dispositif M100 comprend :
- un module d'obtention M101 de mesures locales pour former un vecteur de contribution locale,
- un module de calcul M102 d'une première matrice d'information relative au vecteur de contribution locale,
- un module de réception M301 d'un message en provenance du processeur central, comprenant une liste d'identifiants de processeurs locaux sélectionnés par le processeur central en fonction de leur pertinence pour le calcul d'une matrice de prédiction globale, dite liste de pertinence, ainsi qu'une matrice de prédiction globale,
- un module de détermination M305 d'une présence du premier identifiant dans la liste de pertinence,
- un module de détermination M311 d'une autorisation de contribution, en fonction au moins de la présence du premier identifiant dans la liste de pertinence,
- un module d'émission M103 d'un message comprenant le premier identifiant du premier processeur local, la première matrice d'information et le vecteur de contribution locale, au moins à destination du processeur central, en fonction de l'autorisation de contribution déterminée.

Avantageusement, le dispositif M100 peut également comprendre :
- un module de calcul M308 d'une valeur relative à la pertinence de l'apport d'au moins la première matrice d'information à la matrice de prédiction globale,
- un module de comparaison M309 de comparaison de la valeur calculée à un seuil,
- un module d'abonnement M310 à un flux de messages en provenance d'au moins un deuxième processeur local dont un identifiant est compris dans la liste de pertinence,
- un module de réception M201 d'un message en provenance du deuxième processeur local, le message comprenant une deuxième matrice d'information relative au deuxième processeur local,
- un module de désabonnement M304 d'un flux de messages en provenance du deuxième processeur local si son identifiant n'est pas compris dans la liste de pertinence.

En relation avec la **figure 9****,** on présente maintenant un exemple de structure d'un dispositif de traitement central d'informations locales, selon un aspect de l'invention.

Le dispositif M200 de transmission d'information de routage met en œuvre le procédé de traitement central d'informations locales.

Un tel dispositif M200 peut être compris dans un processeur central.

Par exemple, le dispositif M200 comprend une unité de traitement M230, équipée par exemple d'un microprocesseur µP, et pilotée par un programme d'ordinateur M210, stocké dans une mémoire M220 et mettant en œuvre le procédé de de traitement central d'informations locales selon l'invention. A l'initialisation, les instructions de code du programme d'ordinateur M210 sont par exemple chargées dans une mémoire RAM, avant d'être exécutées par le processeur de l'unité de traitement M230.

Un tel dispositif M200 comprend :
- un module de réception M401 d'un message en provenance d'un processeur local, le message comprenant un identifiant, une matrice d'information et un vecteur de contribution, relatifs au processeur local,
- un module d'ajout M403 de l'identifiant relatif au processeur local dans une liste de processeurs locaux écoutés par le processeur central,
- un module de calcul M501 d'une matrice de prédiction globale à partir de la matrice d'information reçue,

- un module de sélection M601 d'au moins un processeur local de la liste de processeurs locaux écoutés par le processeur central, en fonction d'un critère de pertinence de la matrice d'information associée à l'au moins un processeur local,
- un module d'émission M606 vers la pluralité de processeurs locaux d'un message comprenant la matrice de prédiction globale et une liste des identifiants des processeurs locaux sélectionnés, dite liste de pertinence.

Avantageusement, le dispositif M200 peut également comprendre :
- un module de calcul M602 d'une valeur relative à la pertinence de l'apport de la matrice d'information d'un processeur local à la matrice de prédiction globale,
- un module de comparaison M603 de la valeur calculée à un seuil,
- un module de tri M603b par ordre de pertinence décroissante des identifiants de processeurs locaux sélectionnés dans la liste de pertinence.

Avantageusement, les modules d'émission des dispositifs M100 et M200 sont aptes à émettre des paquets RTP.

Avantageusement, les modules de récepion des dispositifs M100 et M200 sont aptes à recevoir des paquets RTP.

Les modules décrits en relation avec les figures 8 et 9 peuvent être des modules matériels ou logiciels.

## Revendications

1. **Procédé de traitement local d'informations** obtenues par un premier processeur local (201) d'une pluralité de processeurs locaux connectés à un processeur central (101), le premier processeur local (201) étant identifié par un premier identifiant et étant apte à recevoir des messages en provenance du processeur central, le procédé comprenant les étapes suivantes, mises en œuvre par le premier processeur local :
• obtention (L101) de mesures locales pour former un vecteur (i201) de contribution locale,
• calcul (L102) d'une première matrice (J201) d'information relative au vecteur (i201) de contribution locale,
• réception (L301) d'un message en provenance du processeur central, comprenant une liste (CSRC) d'identifiants de processeurs locaux sélectionnés par le processeur central (101) en fonction de leur pertinence pour le calcul par le processeur central d'une matrice (Y) de prédiction globale, dite liste de pertinence, la matrice de prédiction globale étant le produit d'une fusion de mesures locales obtenues par des processeurs locaux de la pluralité,
• en fonction au moins de la présence (L305) du premier identifiant dans la liste de pertinence, une étape (L311, L312) de détermination d'une autorisation de contribution (OK-SND, NOK-SND),
• en fonction de l'autorisation de contribution déterminée (L311, L312), une étape (L103) d'émission d'un message comprenant le premier identifiant du premier processeur local (201), la première matrice (J201) d'information et le vecteur (i201) de contribution locale, au moins à destination du processeur central (101).

2. **Procédé de traitement local d'informations** selon la revendication 1, dans lequel le message reçu en provenance du processeur central comprend en outre la matrice (Y) de prédiction globale, et dans lequel le procédé comprend en outre les étapes suivantes :
• calcul (L308) d'une valeur (VE) relative à la pertinence de l'apport de la première matrice (J201) d'information à la matrice de prédiction globale,
• comparaison (L309) de la valeur (VE) calculée à un seuil (S) ;
et où l'autorisation de contribution est en outre déterminée (L311, L312) en fonction du résultat de la comparaison.

3. **Procédé de traitement local d'informations** selon la revendication 2, dans lequel le premier processeur local est également apte à recevoir des messages en provenance d'au moins un deuxième processeur local (202), le procédé comprenant en outre l'étape suivante :
• réception (L201) d'un message en provenance du deuxième processeur local, le message comprenant une deuxième matrice (J202) d'information relative au deuxième processeur local,
et dans lequel le calcul d'une valeur (VE) relative à la pertinence de l'apport de la première matrice (J201) d'information tient en outre compte de l'apport de la deuxième matrice d'information à la matrice de prédiction globale.

4. **Procédé de traitement local d'informations** selon la revendication 3, dans lequel le message en provenance du deuxième processeur local (202) comprend en outre un deuxième identifiant, le procédé comprenant en outre le désabonnement (L304) d'un flux de messages en provenance du deuxième processeur local (202) si le deuxième identifiant n'est pas compris dans la liste de pertinence (CSRC).

5. **Procédé de traitement local d'informations** selon la revendication 1, comprenant en outre l'abonnement (L310) à un flux de messages en provenance d'au moins un deuxième processeur local (20y) dont un identifiant est compris dans la liste de pertinence (CSRC).

6. **Procédé de traitement central d'informations locales** obtenues par des processeurs locaux d'une pluralité de processeurs locaux (201, 202, 203) connectés à un processeur central (101), comprenant les étapes suivantes mises en œuvre par le processeur central :
• réception (C401) d'un message en provenance d'un premier processeur local (201), le message comprenant un identifiant, une matrice d'information (J201) et un vecteur de contribution (i201), relatifs au premier processeur local,
• réception (C401) d'un message en provenance d'un deuxième processeur local (202), le message comprenant un identifiant, une matrice d'information (J202) et un vecteur de contribution (i202), relatifs au deuxième processeur local,
• ajout (C403) des identifiants relatifs aux premier et deuxième processeurs locaux dans une liste de processeurs locaux écoutés par le processeur central (101),
• calcul (C501) d'une matrice (Y) de prédiction globale à partir des matrices d'information reçues, la matrice de prédiction globale étant le produit d'une fusion de mesures locales obtenues par les processeurs locaux,
• sélection (C601, C602, C603, C604) d'au moins un processeur local (20y) de la liste de processeurs locaux écoutés par le processeur central, en fonction d'un critère de pertinence de la matrice d'information associée à l'au moins un processeur local (20y),
• émission (C606) vers la pluralité de processeurs locaux d'un message comprenant la matrice de prédiction globale et une liste (CSRC) des identifiants des processeurs locaux sélectionnés, dite liste de pertinence.

7. **Procédé de traitement central d'informations locales** selon la revendication 6, dans lequel l'étape de sélection comprend les étapes suivantes :
• calcul (C602) d'une valeur (VE) relative à la pertinence de l'apport de la matrice d'information du processeur local (20y) à la matrice (Y) de prédiction globale,
• comparaison (C603) de la valeur (VE) calculée à un seuil (SG), la sélection étant effectuée si le seuil est atteint.

8. **Procédé de traitement central d'informations locales** selon les revendications 6 ou 7, dans lequel plusieurs processeurs locaux sont sélectionnés, le procédé comprenant, avant l'étape (C606) d'émission, le tri (C603) par ordre de pertinence décroissante des identifiants de processeurs locaux sélectionnés dans la liste de pertinence.

9. **Procédé** selon l'une quelconque des revendications précédentes, où les messages sont des paquets de type RTP, et où la liste de pertinence (CSRC) est comprise dans un entête d'un paquet de type RTP.

10. **Dispositif de traitement local d'informations** obtenues par un premier processeur local (201) d'une pluralité de processeurs locaux connectés à un processeur central (101), le premier processeur local (201) étant identifié par un premier identifiant et étant apte à recevoir des messages en provenance du processeur central, le dispositif comprenant :
• un module d'obtention (M101) de mesures locales pour former un vecteur (i201) de contribution locale,
• un module de calcul (M102) d'une première matrice (J201) d'information relative au vecteur (i201) de contribution locale,
• un module de réception (M301) d'un message en provenance du processeur central, comprenant une liste (CSRC) d'identifiants de processeurs locaux sélectionnés par le processeur central (101) en fonction de leur pertinence pour le calcul par le processeur central d'une matrice (Y) de prédiction globale, dite liste de pertinence, la matrice de prédiction globale étant le produit d'une fusion de mesures locales obtenues par des processeurs locaux de la pluralité,
• un module de détermination (M305) d'une présence du premier identifiant dans la liste de pertinence,
• un module de détermination (M311) d'une autorisation de contribution (OK-SND, NOK-SND), en fonction au moins de la présence du premier identifiant dans la liste de pertinence,
• un module d'émission (M103) d'un message comprenant le premier identifiant du premier processeur local (201), la première matrice (J201) d'information et le vecteur (i201) de contribution locale, au moins à destination du processeur central (101), en fonction de l'autorisation de contribution déterminée.

11. **Dispositif de traitement central d'informations locales** obtenues par des processeurs locaux d'une pluralité de processeurs locaux (201, 202, 203) connectés à un processeur central (101), comprenant :
• un module de réception (M401) d'un message en provenance d'un processeur local (201, 202), le message comprenant un identifiant, une matrice d'information (J201, J202) et un vecteur de contribution (i201, i202), relatifs au processeur local,
• un module d'ajout (M403) de l'identifiant relatif au processeur local dans une liste de processeurs locaux écoutés par le processeur central (101),
• un module de calcul (M501) d'une matrice (Y) de prédiction globale à partir de la matrice d'information reçue, la matrice de prédiction globale étant le produit d'une fusion de mesures locales obtenues par les processeurs locaux,
• un module de sélection (M601) d'au moins un processeur local (20y) de la liste de processeurs locaux écoutés par le processeur central, en fonction d'un critère de pertinence de la matrice d'information associée à l'au moins un processeur local (20y),
• un module d'émission (M606) vers la pluralité de processeurs locaux d'un message comprenant la matrice de prédiction globale et une liste (CSRC) des identifiants des processeurs locaux sélectionnés, dite liste de pertinence.

12. **Système de traitement d'informations locales** comprenant un dispositif de traitement central d'informations locales conforme à la revendication 11 et au moins un dispositif de traitement local d'informations conforme à la revendication 10.

13. **Programme d'ordinateur, caractérisé en ce qu'**il comprend des instructions pour la mise en œuvre des étapes du procédé de traitement local d'informations selon la revendication 1, lorsque ce procédé est exécuté par un processeur.

14. **Programme d'ordinateur, caractérisé en ce qu'**il comprend des instructions pour la mise en œuvre des étapes du procédé de traitement central d'informations locales selon la revendication 6, lorsque ce procédé est exécuté par un processeur.

## Patentansprüche

1. Verfahren zur lokalen Verarbeitung von Informationen, die durch einen ersten lokalen Prozessor (201) aus einer Vielzahl von lokalen Prozessoren, die mit einem zentralen Prozessor (101) verbunden sind, erhalten wurden, wobei der erste lokale Prozessor (201) durch eine erste Kennung identifiziert ist und geeignet ist, Nachrichten von dem zentralen Prozessor zu empfangen, wobei das Verfahren die folgenden Schritte umfasst, die von dem ersten lokalen Prozessor durchgeführt werden:
• Gewinnung (L101) von lokalen Messwerten, um einen Vektor (i201) des lokalen Beitrags zu bilden,
• Berechnung (L102) einer ersten Matrix (J201) von auf den Vektor (i201) des lokalen Beitrags bezogenen Informationen,
• Empfang (L301) einer Nachricht von dem zentralen Prozessor, die eine Liste (CSRC) von Kennungen lokaler Prozessoren, die durch den zentralen Prozessor (101) in Abhängigkeit von ihrer Relevanz für die Berechnung einer Matrix (Y) der globalen Vorhersage durch den zentralen Prozessor ausgewählt wurden, Relevanzliste genannt, umfasst, wobei die Matrix der globalen Vorhersage das Ergebnis einer Zusammenführung von lokalen Messwerten ist, die durch lokale Prozessoren der Vielzahl gewonnen wurden,
• in Abhängigkeit wenigstens vom Vorhandensein (L305) der ersten Kennung in der Relevanzliste, einen Schritt (L311, L312) der Bestimmung einer Beitragsautorisierung (OK-SND, NOK-SND),
• in Abhängigkeit von der bestimmten Beitragsautorisierung (L311, L312), einen Schritt (L103) des Sendens einer Nachricht, welche die erste Kennung des ersten lokalen Prozessors (201), die erste Matrix (J201) von Informationen und den Vektor (i201) des lokalen Beitrags umfasst, wenigstens an den zentralen Prozessor (101).

2. Verfahren zur lokalen Verarbeitung von Informationen nach Anspruch 1, wobei die von dem zentralen Prozessor her empfangene Nachricht außerdem die Matrix (Y) der globalen Vorhersage umfasst, und wobei das Verfahren außerdem die folgenden Schritte umfasst:
• Berechnung (L308) eines Wertes (VE), der sich auf die Relevanz des Beitrags der ersten Matrix (J201) von Informationen zu der Matrix der globalen Vorhersage bezieht,
• Vergleich (L309) des berechneten Wertes (VE) mit einem Schwellenwert (S);
und wobei die Beitragsautorisierung außerdem in Abhängigkeit vom Ergebnis des Vergleichs bestimmt wird (L311, L312).

3. Verfahren zur lokalen Verarbeitung von Informationen nach Anspruch 2, wobei der erste lokale Prozessor außerdem geeignet ist, Nachrichten von wenigstens einem zweiten lokalen Prozessor (202) zu empfangen, wobei das Verfahren außerdem den folgenden Schritt umfasst:
• Empfang (L201) einer Nachricht von dem zweiten lokalen Prozessor, wobei die Nachricht eine zweite Matrix (J202) von Informationen, die sich auf den zweiten lokalen Prozessor beziehen, umfasst,
und wobei die Berechnung eines Wertes (VE), der sich auf die Relevanz des Beitrags der ersten Matrix (J201) von Informationen bezieht, außerdem den Beitrag der zweiten Matrix von Informationen zu der Matrix der globalen Vorhersage berücksichtigt.

4. Verfahren zur lokalen Verarbeitung von Informationen nach Anspruch 3, wobei die Nachricht von dem zweiten lokalen Prozessor (202) außerdem eine zweite Kennung umfasst, wobei das Verfahren außerdem die Abmeldung (L304) eines Flusses von Nachrichten von dem zweiten lokalen Prozessor (202) umfasst, falls die zweite Kennung nicht in der Relevanzliste (CSRC) enthalten ist.

5. Verfahren zur lokalen Verarbeitung von Informationen nach Anspruch 1, welches außerdem die Anmeldung (L310) für einen Fluss von Nachrichten von wenigstens einem zweiten lokalen Prozessor (20y) umfasst, von dem eine Kennung in der Relevanzliste (CSRC) enthalten ist.

6. Verfahren zur zentralen Verarbeitung lokaler Informationen, die durch lokale Prozessoren einer Vielzahl von lokalen Prozessoren (201, 202, 203) gewonnen wurden, die mit einem zentralen Prozessor (101) verbunden sind, die folgenden Schritte umfassend, die von dem zentralen Prozessor durchgeführt werden:
• Empfang (C401) einer Nachricht von einem ersten lokalen Prozessor (201), wobei die Nachricht eine Kennung, eine Matrix von Informationen (J201) und einen Beitragsvektor (i201) umfasst, die sich auf den ersten lokalen Prozessor beziehen,
• Empfang (C401) einer Nachricht von einem zweiten lokalen Prozessor (202), wobei die Nachricht eine Kennung, eine Matrix von Informationen (J202) und einen Beitragsvektor (i202) umfasst, die sich auf den zweiten lokalen Prozessor beziehen,
• Hinzufügen (C403) der Kennungen, die sich auf den ersten und den zweiten lokalen Prozessor beziehen, zu einer Liste lokaler Prozessoren, die von dem zentralen Prozessor (101) angehört werden,
• Berechnung (C501) einer Matrix (Y) der globalen Vorhersage aus empfangenen Matrizen von Informationen, wobei die Matrix der globalen Vorhersage das Ergebnis einer Zusammenführung von lokalen Messwerten ist, die durch die lokalen Prozessoren gewonnen wurden,
• Auswahl (C601, C602, C603, C604) wenigstens eines lokalen Prozessors (20y) aus der Liste lokaler Prozessoren, die von dem zentralen Prozessor angehört werden, in Abhängigkeit von einem Kriterium der Relevanz der Matrix von Informationen, die dem wenigstens einen lokalen Prozessor (20y) zugeordnet ist,
• Senden (C606), an die Vielzahl von lokalen Prozessoren, einer Nachricht, welche die Matrix der globalen Vorhersage und eine Liste (CSRC) der Kennungen der ausgewählten lokalen Prozessoren, Relevanzliste genannt, umfasst.

7. Verfahren zur zentralen Verarbeitung lokaler Informationen nach Anspruch 6, wobei der Schritt der Auswahl die folgenden Schritte umfasst:
• Berechnung (C602) eines Wertes (VE), der sich auf die Relevanz des Beitrags der Matrix von Informationen des lokalen Prozessors (20y) zu der Matrix (Y) der lokalen Vorhersage bezieht,
• Vergleich (C603) des berechneten Wertes (VE) mit einem Schwellenwert (SG), wobei die Auswahl vorgenommen wird, falls der Schwellenwert erreicht ist.

8. Verfahren zur zentralen Verarbeitung lokaler Informationen nach den Ansprüchen 6 oder 7, wobei mehrere lokale Prozessoren ausgewählt werden, wobei das Verfahren vor dem Schritt (C606) des Sendens das Sortieren (C603) der Kennungen von ausgewählten lokalen Prozessoren in der Relevanzliste in der Reihenfolge abnehmender Relevanz umfasst.

9. Verfahren nach einem der vorhergehenden Ansprüche, wobei die Nachrichten RTP-Pakete sind und wobei die Relevanzliste (CSRC) in einem Header eines RTP-Pakets enthalten ist.

10. Vorrichtung zur lokalen Verarbeitung von Informationen, die durch einen ersten lokalen Prozessor (201) aus einer Vielzahl von lokalen Prozessoren, die mit einem zentralen Prozessor (101) verbunden sind, erhalten wurden, wobei der erste lokale Prozessor (201) durch eine erste Kennung identifiziert ist und geeignet ist, Nachrichten von dem zentralen Prozessor zu empfangen, wobei die Vorrichtung umfasst:
• ein Modul zur Gewinnung (M101) von lokalen Messwerten, um einen Vektor (i201) des lokalen Beitrags zu bilden,
• ein Modul zur Berechnung (M102) einer ersten Matrix (J201) von auf den Vektor (i201) des lokalen Beitrags bezogenen Informationen,
• ein Modul zum Empfang (M301) einer Nachricht von dem zentralen Prozessor, die eine Liste (CSRC) von Kennungen lokaler Prozessoren, die durch den zentralen Prozessor (101) in Abhängigkeit von ihrer Relevanz für die Berechnung einer Matrix (Y) der globalen Vorhersage durch den zentralen Prozessor ausgewählt wurden, Relevanzliste genannt, umfasst, wobei die Matrix der globalen Vorhersage das Ergebnis einer Zusammenführung von lokalen Messwerten ist, die durch lokale Prozessoren der Vielzahl gewonnen wurden,
• ein Modul zur Bestimmung (M305) eines Vorhandenseins der ersten Kennung in der Relevanzliste,
• ein Modul zur Bestimmung (M311) einer Beitragsautorisierung (OK-SND, NOK-SND) in Abhängigkeit wenigstens vom Vorhandensein der ersten Kennung in der Relevanzliste,
• ein Modul zum Senden (M103) einer Nachricht, welche die erste Kennung des ersten lokalen Prozessors (201), die erste Matrix (J201) von Informationen und den Vektor (i201) des lokalen Beitrags umfasst, wenigstens an den zentralen Prozessor (101) in Abhängigkeit von der bestimmten Beitragsautorisierung.

11. Vorrichtung zur zentralen Verarbeitung lokaler Informationen, die durch lokale Prozessoren einer Vielzahl von lokalen Prozessoren (201, 202, 203) gewonnen wurden, die mit einem zentralen Prozessor (101) verbunden sind, umfassend:
• ein Modul zum Empfang (M401) einer Nachricht von einem lokalen Prozessor (201, 202), wobei die Nachricht eine Kennung, eine Matrix von Informationen (J201, J202) und einen Beitragsvektor (i201, i202) umfasst, die sich auf den lokalen Prozessor beziehen,
• ein Modul zum Hinzufügen (M403) der Kennung, die sich auf den lokalen Prozessor bezieht, zu einer Liste lokaler Prozessoren, die von dem zentralen Prozessor (101) angehört werden,
• ein Modul zur Berechnung (M501) einer Matrix (Y) der globalen Vorhersage aus der empfangenen Matrix von Informationen, wobei die Matrix der globalen Vorhersage das Ergebnis einer Zusammenführung von lokalen Messwerten ist, die durch die lokalen Prozessoren gewonnen wurden,
• ein Modul zur Auswahl (M601) wenigstens eines lokalen Prozessors (20y) aus der Liste lokaler Prozessoren, die von dem zentralen Prozessor angehört werden, in Abhängigkeit von einem Kriterium der Relevanz der Matrix von Informationen, die dem wenigstens einen lokalen Prozessor (20y) zugeordnet ist,
• ein Modul zum Senden (M606), an die Vielzahl von lokalen Prozessoren, einer Nachricht, welche die Matrix der globalen Vorhersage und eine Liste (CSRC) der Kennungen der ausgewählten lokalen Prozessoren, Relevanzliste genannt, umfasst.

12. System zur Verarbeitung lokaler Information, welches eine Vorrichtung zur zentralen Verarbeitung lokaler Informationen gemäß Anspruch 11 und wenigstens eine Vorrichtung zur lokalen Verarbeitung von Informationen gemäß Anspruch 10 umfasst.

13. Computerprogramm, **dadurch gekennzeichnet, dass** es Anweisungen zur Durchführung der Schritte des Verfahrens zur lokalen Verarbeitung von Informationen nach Anspruch 1, wenn dieses Verfahren von einem Prozessor ausgeführt wird, umfasst.

14. Computerprogramm, **dadurch gekennzeichnet, dass** es Anweisungen zur Durchführung der Schritte des Verfahrens zur zentralen Verarbeitung lokaler Informationen nach Anspruch 6, wenn dieses Verfahren von einem Prozessor ausgeführt wird, umfasst.

## Claims

1. Method for locally processing information obtained by a first local processor (201) of a plurality of local processors connected to a central processor (101), the first local processor (201) being identified by a first identifier and being capable of receiving messages from the central processor, the method comprising the following steps, implemented by the first local processor:
• obtaining (L101) local measurements in order to form a local contribution vector (i201),
• computing (L102) a first information matrix (J201) relating to the local contribution vector (i201),
• receiving (L301) a message from the central processor, comprising a list (CSRC) of identifiers of local processors selected by the central processor (101) on the basis of their relevance to the computation of a global prediction matrix (Y), called the relevance list, the global prediction matrix being the product of a fusion of local measurements obtained by local processors of the plurality,
• on the basis of at least the presence (L305) of the first identifier in the relevance list, a step (L311, L312) of determining a contribution authorization (OK-SND, NOK-SND),
• on the basis of the determined contribution authorization (L311, L312), a step (L103) of transmitting a message comprising the first identifier of the first local processor (201), the first information matrix (J201) and the local contribution vector (i201), at least to the central processor (101).

2. Method for locally processing information according to Claim 1, in which the message received from the central processor moreover comprises the global prediction matrix (Y) and in which the method moreover comprises the following steps:
• computing (L308) a value (VE) relating to the relevance of the input from the first information matrix (J201) to the global prediction matrix,
• comparing (L309) the computed value (VE) with a threshold (S);
and where the contribution authorization is moreover determined (L311, L312) on the basis of the result of the comparison.

3. Method for locally processing information according to Claim 2, in which the first local processor is also capable of receiving messages from at least one second local processor (202), the method moreover comprising the following step:
• receiving (L201) a message from the second local processor, the message comprising a second information matrix (J202) relating to the second local processor,
and in which the computation of a value (VE) relating to the relevance of the input from the first information matrix (J201) moreover takes account of the input from the second information matrix to the global prediction matrix.

4. Method for locally processing information according to Claim 3, in which the message from the second local processor (202) moreover comprises a second identifier, the method moreover comprising unsubscribing (L304) from a message stream from the second local processor (202) if the second identifier is not included in the relevance list (CSRC).

5. Method for locally processing information according to Claim 1, moreover comprising subscribing (L310) to a message stream from at least one second local processor (20y) for which an identifier is included in the relevance list (CSRC).

6. Method for centrally processing local information obtained by local processors of a plurality of local processors (201, 202, 203) connected to a central processor (101), comprising the following steps implemented by the central processor:
• receiving (C401) a message from a first local processor (201), the message comprising an identifier, an information matrix (J201) and a contribution vector (i201), which relate to the first local processor,
• receiving (C401) a message from a second local processor (202), the message comprising an identifier, an information matrix (J202) and a contribution vector (i202), which relate to the second local processor,
• adding (C403) the identifiers that relate to the first and second local processors in a list of local processors that are listened to by the central processor (101),
• computing (C501) a global prediction matrix (Y) from the received information matrices, the global prediction matrix being the product of a fusion of local measurements obtained by local processors,
• selecting (C601, C602, C603, C604) at least one local processor (20y) from the list of local processors that are listened to by the central processor, on the basis of a relevance criterion for the information matrix associated with the at least one local processor (20y),
• transmitting (C606) to the plurality of local processors a message comprising the global prediction matrix and a list (CSRC) of the identifiers of the selected local processors, called a relevance list.

7. Method for centrally processing local information according to Claim 6, in which the selection step comprises the following steps:
• computing (C602) a value (VE) relating to the relevance of the input from the information matrix of the local processor (20y) to the global prediction matrix (Y),
• comparing (C603) the computed value (VE) with a threshold (SG), the selection being made if the threshold is reached.

8. Method for centrally processing local information according to Claim 6 or 7, in which multiple local processors are selected, the method comprising, before the transmission step (C606), sorting (C603) by order of decreasing relevance the identifiers of local processors selected in the relevance list.

9. Method according to any one of the preceding claims, where the messages are packets of RTP type, and where the relevance list (CSRC) is included in a header of a packet of RTP type.

10. Device for locally processing information obtained by a first local processor (201) of a plurality of local processors connected to a central processor (101), the first local processor (201) being identified by a first identifier and being capable of receiving messages from the central processor, the device comprising:
• a module (M101) for obtaining local measurements in order to form a local contribution vector (i201),
• a module (M102) for computing a first information matrix (J201) relating to the local contribution vector (i201),
• a module (M301) for receiving a message from the central processor, comprising a list (CSRC) of identifiers of local processors selected by the central processor (101) on the basis of their relevance to the computation of a global prediction matrix (Y), called a relevance list, the global prediction matrix being the product of a fusion of local measurements obtained by local processors of the plurality,
• a module (M305) for determining a presence of the first identifier in the relevance list,
• a module (M311) for determining a contribution authorization (OK-SND, NOK-SND), on the basis of at least the presence of the first identifier in the relevance list,
• a module (M103) for transmitting a message comprising the first identifier of the first local processor (201), the first information matrix (J201) and the local contribution vector (i201) at least to the central processor (101), on the basis of the determined contribution authorization.

11. Device for centrally processing local information obtained by local processors of a plurality of local processors (201, 202, 203) connected to a central processor (101), comprising:
• a module (M401) for receiving a message from a local processor (201, 202), the message comprising an identifier, an information matrix (J201, J202) and a contribution vector (i201, i202), which relate to the local processor,
• a module (M403) for adding the identifier relating to the local processor to a list of local processors that are listened to by the central processor (101),
• a module (M501) for computing a global prediction matrix (Y) from the received information matrix, the global prediction matrix being the product of a fusion of local measurements obtained by the local processors,
• a module (M601) for selecting at least one local processor (20y) from the list of local processors that are listened to by the central processor, on the basis of a relevance criterion for the information matrix associated with the at least one local processor (20y),
• a module (M606) for transmitting to the plurality of local processors a message comprising the global prediction matrix and a list (CSRC) of the identifiers of the selected local processors, called a relevance list.

12. System for processing local information comprising a device for centrally processing local information according to Claim 11 and at least one device for locally processing information according to Claim 10.

13. Computer program, **characterized in that** it comprises instructions for implementing the steps of the method for locally processing information according to Claim 1 when this method is executed by a processor.

14. Computer program, **characterized in that** it comprises instructions for implementing the steps of the method for centrally processing local information according to Claim 6 when this method is executed by a processor.
